# EUROPÄISCHE PATENTSCHRIFT

(11) **EP 0 389 412 B1**
(45) Veröffentlichungstag und Bekanntmachung des Hinweises auf die Patenterteilung: **26.05.1993**
(21) Anmeldenummer: 90810143.9
(22) Anmeldetag: 26.02.1990
(51) Int. Cl.: E21D 20/02, F16B 13/14

(54) **Zerstörbare Ankerpatrone**
Destructible anchoring cartridge
Cartouche d'ancrage destructible

(30) Priorität: 22.03.1989 DE 3909428
(43) Veröffentlichungstag der Anmeldung: 26.09.1990
(73) Patentinhaber: HILTI Aktiengesellschaft, 9494 Schaan (LI)
(72) Erfinder: Mauthe, Peter, D-8939 Türkheim (DE)
(74) Vertreter: Wildi, Roland

(56) Entgegenhaltungen:
- DE-A- 2 705 484
- DE-B- 2 005 161
- US-A- 4 659 258

## Beschreibung

Die Erfindung betrifft eine zerstörbare Patrone zur Verankerung von Befestigungselementen in Bohrlöchern, mit die Komponenten voneinander getrennt enthaltenden Abteilen und einem die Patrone umgebenden Mantel mit unterbrochener Aussenseite aus einem radial verformbaren Material.

Dübel der genannten, beispielsweise aus der US-A-4 659 258 bekannten Art werden zur Verankerung von Ankerbolzen in Gestein, Mauerwerk oder Beton verwendet. Der die Patrone umgebende Mantel dient dabei der mechanischen Vorverankerung der Ankerstange bis zum Aushärten der Masse. Im Bereich des Mantels kommt keine Klebeverbindung zwischen der Ankerstange und der Bohrlochwandung zustande. Der mittels der aushärtbaren Masse verankerbare Bereich der Ankerstange wird um die Länge des Mantels verkürzt. Dies kann zu Reduktionen des Verankerungswertes führen.

Im Unterwasserbereich werden Befestigungen mittels aushärtbarer Massen ebenfalls bereits seit einiger Zeit angewendet. Dabei besteht das Problem, dass das im Bohrloch enthaltene Wasser möglichst vollständig aus dem Bohrloch entfernt werden muss, um eine Beeinträchtigung der Festigkeit der aushärtbaren Masse zu verhindern. So ist es bereits bekannt, vor dem Einführen der Patrone zusätzliche aushärtbare Massen in das Bohrloch einzubringen. Das restliche im Bohrloch verbleibende Wasser wird dann durch das Einführen der Patrone aus dem Bohrloch verdrängt. Dieses Verfahren ist jedoch umständlich und zeitaufwendig. Da die Sicht im Unterwasserbereich oft sehr schlecht ist, ist das Einbringen der aushärtbaren Masse oft recht schwierig.

Aus der DE-A-2 005 161 ist eine Vorrichtung zum Anbringen eines Verankerungsmittels für Stützbolzen, bestehend aus einem rohrförmigen Element, welches durch Aufrollen eines Netz- oder Gitterwerks aus einem brechbaren Material gebildet ist, bekannt. Diese bekannte Vorrichtung dient der Aufnahme von einzelnen Komponenten eines Zements. Bei der Einführung eines Bolzens in ein derartiges, sich in einer Bohrung eines Aufnahmemateriales befindliches, rohrförmiges Element werden die Komponenten des Zements untereinander vermischt und das Netz- oder Gitterwerk in Teilchen kleiner Dimensionen zerlegt, die sich ebenfalls homogen mit dem Zement vermischen und zu dessen Haftung an der Wandung der Bohrung beitragen.

Der Erfindung liegt die Aufgabe zugrunde, eine zerstörbare Patrone zur Verankerung von Befestigungselementen in Bohrlöchern zu schaffen, die auf einfache Weise das Entfernen von Wasser im Bohrloch ermöglicht.

Gemäss der Erfindung wird dies dadurch erreicht, dass der Mantel eine Schaum- oder Faserstruktur aufweist und an seiner Aussenseite in axialer Richtung verlaufende Rillen vorgesehen sind. Ein Schaum- oder Faserstruktur aufweisender Mantel ist nach dem Einbringen der Patrone in ein Bohrloch beim Eintreiben der Ankerstange relativ leicht zerstörbar. Somit ist gewährleistet, dass eine adhäsive Verbindung der aushärtenden Masse mit der Bohrlochwandung zustandekommt. Der Mantel kann sich auch in der aushärtenden Masse chemisch auflösen.

Beim Einführen der Patrone mit dem erfindungsgemässen Mantel soll das überschüssige Wasser aus dem Bohrloch verdrängt werden. Aus diesem Grund weist der Mantel an seiner Aussenseite in axialer Richtung verlaufenden Rillen auf. Solche Rillen dienen dem Abfliessen des Wassers, das durch die Patrone aus dem Bohrlochtiefsten verdrängt wird. Bevorzugt sind Hartschäume; deren Bruchstücke z.B. auch Füllmittelfunktion aufweisen.

Besonders zweckmässig ist es, wenn der Mantel aus einem Polyurethanschaum besteht. Polyurethanschaumstoffe wie sie als Mantelmaterial verwendet werden können, einschliesslich der bevorzugten Hartschaumstoffe, sind z.B. in Ullmann, Enzyklopädie der technischen Chemie 4. Aufl. Band 19, S. 317 bis 326 beschrieben.

Eine weitere vorteilhafte Ausführung besteht darin, für den Mantel Polyisocyanuratschaum, eine Spezialität der Polyurethanschäume, zu verwenden. Weiterhin ist es vorteilhaft, Epoxidharzschäume für den Mantel zu verwenden, insbesondere Epoxidharze, die mit Polyaminen, Polyamiden, Polyimidazolinen oder Ketiminen gehärtet sind. Weiterhin ist es vorteilhaft, für den Mantel radikalisch gehärtete Schäume zu verwenden. Hierzu gehören Schäume auf UP-, MMA- und Epoxyacrylatbasis. Eine weitere zweckmässige Ausführung besteht darin, dass der Mantel aus Silikonschaum besteht. Dazu können aufschäumbare Zweikomponentensilikone oder quasi Einkomponentensysteme verwendet werden. Alle vorgenannten Schaumstoffe und deren Herstellung sind bekannt (vgl. z.B. Ullmann, Encyklopädie der technischen Chemie, 4. Aufl. Band 15, S. 442; Band 20, S. 418).

Der Mantel hat die Aufgabe, das überschüssige im Bohrloch vorhandene Wasser aus dem Bohrloch zu verdrängen. Es ist daher vorteilhaft, dass die Schaumstruktur des Mantels geschlossenzellig ist. Durch die geschlossenzellige Struktur des Schaumstoffes ist die Wasseraufnahme des Schaumstoffes gering. Für gewisse Anwendungen sind jedoch auch offenzellige Schaumstrukturen möglich.

Eine weitere vorteilhafte Lösung besteht in einem Mantel aus Fasermaterial bzw. darin, dass der Mantel zumindest eine Fasern enthaltende Schicht aufweist. Die Fasern können relativ lang sein und sich beim Einführen der Patrone elastisch an den Umfang der Patrone anlegen. Befinden sich kurze Fasern im Bereich von Hohlräumen, so können sich diese bürstenartig aufstellen und bilden eine mechanische Vorverankerung der Patrone. Auch eine Verwendung von Faser-Vlies ist möglich. Neben natürlichen Materialien können vor allem synthetische Materialien (z.B. Nylon) verwendet werden.

Die Erfindung soll nachstehend, anhand der sie beispielsweise wiedergebenden Zeichnungen, näher erläutert werden. Es zeigen:
- Fig. 1: eine erfindungsgemässe Patrone, im Schnitt dargestellt;
- Fig. 2: einen Querschnitt durch die in Fig. 1 dargestellte Patrone, entlang der Linie II-II;
- Fig. 3: die Patrone gemäss Fig. 1 und 2, in ein Bohrloch eingesetzt;
- Fig. 4: eine weitere Ausführung einer erfindungsgemässen Patrone.

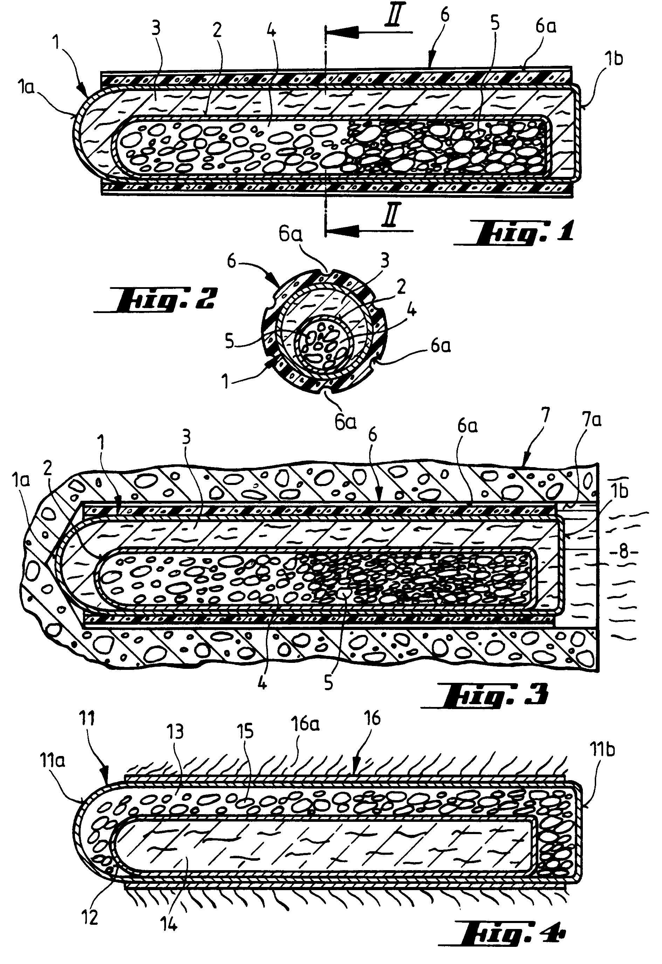

Die aus Fig. 1 bis 3 ersichtliche Patrone besteht aus einer äusseren Hülle 1 und einer darin angeordneten inneren Hülle 2. Die äussere Hülle 1 weist ein in Setzrichtung vorderes Ende 1a und ein diesem entgegengesetztes, rückwärtiges Ende 1b auf. Das vordere Ende 1a der äusseren Hülle ist gerundet, wodurch das Einführen der Patrone in ein Bohrloch erleichtert wird. Die äussere Hülle 1 enthält eine erste Komponente 3 einer nach dem Mischen der Komponenenten aushärtenden Zweikomponentenmasse. Die zweite Komponente 4 ist in der inneren Hülle 2 angeordnet. Neben der zweiten Komponente 4 enthält die innere Hülle 2 jedoch auch Füllstoffe 5. Diese Füllstoffe 5 sind vorzugsweise Quarzsandkörner, welche auf ihrer Oberfläche mit dem als zweite Komponente 4 dienenden Härter beschichtet sind. Ein Mantel 6 aus Schaumstoff ist auf die äussere Hülle 1 aufgeschoben. Der Mantel 6 weist einen sich in Einführrichtung verjüngenden Aussendurchmesser auf. Der Mantel 6 ist ausserdem an seiner Aussenseite mit in axialer Richtung verlaufenden Rillen 6a versehen. Die Rillen 6a dienen beim Einführen der Patrone in ein Wasser enthaltendes Bohrloch dem Entweichen des durch die Patrone verdrängten Wassers.

In Fig. 3 ist die Patrone in ein Aufnahmematerial 7 eingesetzt. Das Aufnahmematerial 7 ist mit einem Bohrloch 7a versehen, dessen Durchmesser etwa dem Aussendurchmesser des Mantels 6 entspricht. Beim Einführen der Patrone in das Bohrloch 7a wird das im Bohrloch enthaltene Wasser durch die Patrone verdrängt. Das Wasser gelangt über die in axialer Richtung verlaufenden Rillen 6a nach aussen. Nach dem Einsetzen der Patrone in das Bohrloch 7a wird diese durch Einführen einer Ankerstange zerstört und die darin enthaltenen Komponenten 3, 4 miteinander vermischt. Der vorzugsweise aus Schaumstoff bestehende Mantel 6 wird dabei ebenfalls zerstört, so dass eine adhäsive Verbindung mit der Wandung des Bohrloches 7a zustandekommt.

Die aus Fig. 4 ersichtliche Patrone entspricht im wesentlichen der in den Fig. 1 bis 3 dargestellten Ausführung. Diese besteht wiederum aus einer äusseren Hülle 11 und einer darin angeordneten inneren Hülle 12. Die äussere Hülle 11 weist ein in Setzrichtung vorderes Ende 11a und ein rückwärtiges Ende 11b auf. Die äussere Hülle 11 enthält eine erste Komponente 13 und die innere Hülle 12 enthält eine zweite Komponente 14. Im Unterschied zu der in Fig. 1 bis 3 dargestellten Ausführung sind Füllstoffe 15 in der äusseren Hülle 11 angeordnet. Auf die äussere Hülle 11 ist ein Mantel 16 aufgebracht, der an seiner Aussenseite mit Fasern 16a versehen ist. Die Fasern 16a dienen beim Einführen der Patrone in ein Bohrloch ebenfalls dem Verdrängen des darin enthaltenen Wassers. Die Fasern 16a können auch direkt auf die äussere Hülle 11 aufgebracht werden.

## Patentansprüche

1. Zerstörbare Patrone zur Verankerung von Befestigungselementen in Bohrlöchern, mit die Komponenten voneinander getrennt enthaltenden Abteilen und einem die Patrone umgebenden Mantel (6, 16) mit unterbrochener Aussenseite aus einem radial verformbaren Material, **dadurch gekennzeichnet,** dass der Mantel (6, 16) eine Schaum- oder Faserstruktur aufweist und an seiner Aussenseite in axialer Richtung verlaufende Rillen (6a) vorgesehen sind.-

2. Patrone nach Anspruch 1, dadurch gekennzeichnet, dass der Mantel (6) aus einem Polyrethanschaum besteht.

3. Patrone nach Anspruch 2, dadurch gekennzeichnet, dass der Mantel (6) aus Polyisocyanurat-Schaum besteht.

4. Patrone nach Anspruch 1, dadurch gekennzeichnet, dass der Mantel (6) aus Epoxidharzschaum besteht.

5. Patrone nach Anspruch 1, dadurch gekennzeichent, dass der Mantel (6) aus radikalisch gehärtetem Schaum besteht.

6. Patrone nach Anspruch 1, dadurch gekennzeichnet, dass der Mantel (6) aus Silikonschaum besteht.

7. Patrone nach einem der Ansprüche 1 bis 6, dadurch gekennzeichent, dass die Schaumstruktur geschlossenzellig ist.

8. Patrone nach einem der Ansprüche 1 bis 7, dadurch gekennzeichnet, dass der Schaum ein Hartschaum ist.

9. Patrone nach Anspruch 1, dadurch gekennzeichent, dass der Mantel (16) zumindest eine Faser (16a) enthaltende Schicht aufweist.

## Claims

1. Destructible cartridge for anchoring fixing elements in bore holes, comprising chambers which separate the components from each other and a casing (6, 16), which surrounds the cartridge and which has an interrupted exterior of a radially deformable material, **characterised in that** the casing (6, 16) has a foam or fibre structure and that grooves (6a), which extend in the axial direction, are provided at its exterior.

2. Cartridge according to claim 1, **characterised in that** the casing (6) is made of a polyurethane foam.

3. Cartridge according to claim 2, **characterised in that** the casing (6) is made of polyisocyanurate foam.

4. Cartridge according to claim 1, **characterised in that** the casing (6) is made of epoxy-resin foam.

5. Cartridge according to claim 1, **characterised in that** the casing (6) is made of radically hardened foam.

6. Cartridge according to claim 1, **characterised in that** the casing (6) is made of silicon foam.

7. Cartridge according to one of claims 1 to 6, **characterised in that** the foam structure is one of closed cells.

8. Cartridge according to one of claims 1 to 7, **characterised in that** the foam is a hard foam.

9. Cartridge according to claim 1, **characterised in that** the casing (16) comprises at least one fibrous (16a) layer.

## Revendications

1. Cartouche destructible pour l'ancrage d'éléments de fixation dans des trous de perçage, comprenant des compartiments lesquels contiennent séparément les constituants, et une enveloppe (6, 16) entourant la cartouche avec une surface extérieure discontinue réalisée dans un matériau déformable dans le sens radial, **caractérisée en ce** que l'enveloppe (6, 16) présente une structure de mousse ou de fibres et que sur sa surface extérieure sont prévues des gorges (6a) qui s'étendent dans le sens axial.

2. Cartouche selon la revendication 1, caractérisée en ce que l'enveloppe (6) est constituée d'une mousse de polyuréthane.

3. Cartouche selon la revendication 2, caractérisée en ce que l'enveloppe (6) est constituée de mousse de polyisocyanurate.

4. Cartouche selon la revendication 1, caractérisée en ce que l'enveloppe (6) est constituée de mousse de résine époxyde.

5. Cartouche selon la revendication 1, caractérisée en ce que l'enveloppe (6) est constituée de mousse à durcissement radicalaire.

6. Cartouche selon la revendication 1, caractérisée en ce que l'enveloppe (6) est constituée de mousse de silicone.

7. Cartouche selon l'une des revendications 1 à 6, caractérisée en ce que la structure de mousse est à alvéoles fermées.

8. Cartouche selon l'une des revendications 1 à 7, caractérisée en ce que la mousse est une mousse rigide.

9. Cartouche selon la revendication 1, caractérisée en ce que l'enveloppe (16) comporte au moins une couche contenant des fibres (16a).
